# EUROPÄISCHE PATENTSCHRIFT

(11) **EP 3 262 346 B1**
(45) Veröffentlichungstag und Bekanntmachung des Hinweises auf die Patenterteilung: **18.03.2020**
(21) Anmeldenummer: 16712717.4
(22) Anmeldetag: 15.02.2016
(51) Int. Cl.: F23J 15/02, F23G 5/46, F23G 5/48, F23J 15/06

(54) **MEHRZUGKESSEL**
MULTIPASSAGE BOILER
CHAUDIÈRE À PLUSIEURS PASSAGES

(30) Priorität: 24.02.2015 DE 102015203244
(43) Veröffentlichungstag der Anmeldung: 03.01.2018
(73) Patentinhaber: Steinmüller Babcock Environment GmbH, 51643 Gummersbach (DE); Nippon Steel Engineering Co., Ltd., Shinagawa-ku Tokyo 141-8604 (JP)
(72) Erfinder: ZORBACH, Ingo, 51647 Wiehl (DE); KOBAYASHI, Atsushi, 51643 Gummersbach (DE); TANAKA, Hirokazu, 51643 Gummersbach (DE); ISHIDA, Yoshihiro, 51643 Gummersbach (DE); KAWATA, Kazuteru, 51643 Gummersbach (DE)
(74) Vertreter: Lüdtke, Thomas
(86) Internationale Anmeldenummer: PCT/DE2016/000050
(87) Internationale Veröffentlichungsnummer: WO 2016/134686

(56) Entgegenhaltungen:
- EP-A1- 0 550 905
- WO-A1-2013/169139
- US-A1- 2003 095 918
- US-A1- 2004 139 857

## Beschreibung

Die Erfindung betrifft einen Mehrzugkessel zur Kühlung bzw. zur Kühlung und gleichzeitigen Reinigung eines Rauchgases nach den Merkmalen des Oberbegriffes des ersten Patentanspruches.

Die Erfindung ist überall dort einsetzbar, wo dem Feuerrost einer Verbrennungsanlage bevorzug für Müll ein Mehrzugkessel nachgeschaltet ist, in den die Abgase der Feuerung eingeleitet werden.

Mehrzugkessel von Müllverbrennungsanlagen weisen mehrere Züge auf, durch die das Rauchgas zu seiner Abkühlung und Reinigung geleitet wird. Die Abgase der Müllfeuerung werden üblicherweise mit Sekundärluft vermischt und brennen innerhalb von Sekunden im ersten Zug aus. Das ausgebrannte Rauchgas wird am oberen Ende des ersten Zuges in einen zweiten Zug umgelenkt. Im ersten und zweiten Zug gibt das Rauchgas einen Teil seiner Wärme durch Strahlung an die Kesselwände ab. Im zweiten Zug befindet sich in der Regel eine Umlenkung in einen dritten Zug. In dieser Umlenkung wird ein Teil der Aschepartikel, die bis dahin von der Strömung mitgenommen wurden, aufgrund von Schwerkraft und Trägheit abgeschieden und über eine Öffnung in einen Trichter, den sogenannten Aschetrichter, ausgetragen. Sowohl im zweiten als auch in weiteren Zügen können sich Wärmeüberträger oder Verdampfer oder Überhitzer befinden, über deren Heizflächen Wärmeenergie an das im Inneren befindliche Medium abgegeben und abgeführt wird. Ein gattungsgemäßer Mehrzugkessel ist beispielsweise in DE 10 2008 027 740 A1 beschrieben. An den im zweiten Zug angeordneten Überhitzern oder Wärmetauschern entsteht Hochtemperaturkorrosion. Diese wird ausgelöst durch die Ablagerung von Alkalien haltiger Asche aus einem Rauchgas mit Temperaturen oberhalb von 400°C auf Heizflächen, die eine Materialtemperatur ebenfalls oberhalb von 300°C haben. Die Korrosionsrate ist abhängig von der Rauchgastemperatur, der Materialtemperatur und der Strömungsgeschwindigkeit des Rauchgases. Generell gilt, dass die Korrosionsrate mit steigender Strömungsgeschwindigkeit und steigender Materialtemperatur sowie steigenden Konzentration von Halogenverbindungen im Rauchgas und der Asche zunimmt.

Zur Begrenzung der Korrosionsraten werden die besonders gefährdeten Überhitzer aus niedrig legierten Stählen auf Materialtemperaturen von ca. 430 °C begrenzt. Überhitzer mit gecladdeten Oberflächen erreichen Materialtemperatur bis zu 460°C.

Zur Reduzierung von Ammoniak-Schlupf der SCR sowie als alleinige Einrichtung zur Reduktion von Stickoxiden werden High-Dust SCR Katalysatoren in einem Temperaturbereich von unterhalb 400 °C eingesetzt, da sonst die Verschmutzung mit angelagerter Asche nicht zu beherrschen ist. Diese Katalysatoren können in Form von Platten im Kesselraum angeordnet sein. Durch Ablagerung von Aschepartikel aus dem Rauchgas können sich auf ihrer Oberfläche Beläge bilden. Die Beläge auf dem Katalysator isolieren diesen vom Rauchgas und können ihn somit unbrauchbar machen. Erst unterhalb von 400 °C sind die Beläge so strukturiert, dass sie aus den Kanälen des Katalysators mittels Dampfblasens entfernt werden können. Hierdurch ist der Einsatz des Katalysators auf Temperaturen unterhalb von 400 °C begrenzt.

Durch das Auftreten hoher Korrosionsraten ist die Standzeit der Überhitzer begrenzt. Weiterhin hat die Belagsbildung einen geringeren Wärmeübergang am Überhitzer zur Folge, was zu einer größeren Dimensionierung desselben führt. Die Reinigungen durch Reinigungseinrichtungen müssen daher in regelmäßigen Zeitabständen diskontinuierlich durchgeführt werden. Grobe und verbundene Ascheteile führen zu Anbackungen am Überhitzer, die entfernt werden müssen.

Wird zur Entstickung des Rauchgases eine SNCR (Selektive Nicht-Katalytische Entstickung) verwenden, so kann bei hohem Ammoniakschlupf die Notwendigkeit entstehen, einen Schlupfkatalysator zur Reduktion des Ammoniakschlupfs einzusetzen.

Ein hoher Verschmutzungsgrad der Heizflächen führt weiterhin dazu, dass die Temperaturen im ersten und zweiten Zug nicht immer optimal sind, so dass die nicht-katalytische Reduktion der Stickoxide nicht effizient abläuft. Damit ist mit keiner optimalen Abscheideleistung zu rechnen.

Die US 2003/095918 A1 beschreibt einen Mehrzugkessel zur Kühlung bzw. zur Kühlung und zur gleichzeitigen Reinigung eines Rauchgases einer Müllverbrennungsanlage, wobei der Kessel einen ersten Zug, eine untere Öffnung, in die Rauchgas eingeleitet wird, aufweist und einen zweiten Zug, einen Überhitzer, einen Wärmetauscher, einen Boden mit einer unteren Öffnung und einen aufsteigenden Kanal, durch den das Rauchgas den zweiten Zug verlässt, wobei eine sich nach unten bewegende Schüttung aus kugelförmigen Teilen im zweiten Zug des Kessels, die durch die untere Öffnung des Bodens entnommen und durch eine obere Öffnung in den zweiten Zug aufgegeben wird, wobei durch die Bewegung der Schüttung über die Oberfläche der Heizflächen die korrosiven Bestandteile der Flugasche entfernt werden. Der Mehrzweckkessel weist keinen Überhitzer und keinen Wärmetauscher im zweiten Zug und in der bewegten Schüttung auf.

Es ist daher Aufgabe der Erfindung, die genannten Nachteile des Standes der Technik zu beseitigen und einen Mehrzugkessel zu entwickeln, in dem die Oberflächen von Überhitzer und Wärmetauscher kontinuierlich weitestgehend korrosionsfrei gehalten werden, wobei vorhandene Katalysatoren über die Betriebsdauer wirksam bleiben sollen und die Temperaturen im Kessel optional sein sollen.

Diese Aufgabe wird durch einen Mehrzugkessel zum Reinigen und Kühlen eines Rauchgases einer Müllverbrennungsanlage nach den kennzeichnenden Merkmalen des ersten Patentanspruches gelöst.

Unteransprüche geben vorteilhafte Ausgestaltungen der Erfindung wieder.

Die erfindungsgemäße Lösung sieht einen Mehrzugkessel zum Reinigen und Kühlen eines Rauchgases, vorzugsweise für eine Müllverbrennungsanlage, vor, bei dem ein erster Zug eine untere Öffnung aufweist, in die das Rauchgas eingeleitet wird, wobei das Rauchgas den ersten Zug über eine Umleitung im oberen Bereich des ersten Zuges verlässt und in einen zweiten Zug gelangt. In diesem zweiten Zug sind ein Überhitzer und ein Wärmetauscher angeordnet. In den weiteren Zügen, insbesondere in einem vierten Zug, können Katalysatoren, z. B. in Form von Platten, angeordnet sein. Im unteren Bereich des zweiten Zuges befindet sich ein Boden, durch dessen Form eine Entnahme von Kugeln oder runden Körpern begünstigt wird. Das kann ein Trichter mit einer unteren Öffnung sein. Weiterhin wird das Rauchgas nach dem zweiten Zug weiter nach oben umgeleitet, wobei sich nach Abkühlung Asche und Feinstaub absetzt, die durch den Aschetrichter ausgetragen werden. Das Umleiten des Rauchgases erfolgt in einen aufsteigenden Kanal. Dieser kann in einem Winkel der Kesselwand angeordnet sein. Der aufsteigende Kanal entspricht dem dritten Zug, der durch eine Wand vom zweiten Zug getrennt ist. Das Umleiten des Rauchgases über das untere Ende der senkrechten Trennwand erfolgt vom zweiten zum dritten Zug.

Erfindungsgemäß ist zumindest im zweiten Zug des Kessels eine sich langsam nach unten bewegende Schüttung aus kugelförmigen Teilen angeordnet, die durch eine untere Öffnung des Bodens wie des Trichters zusammen mit Asche und Feinstaub entnommen wird, wobei die Zugabe der kugelförmigen Teile durch eine obere Öffnung erfolgt. Diese obere Öffnung kann in der Decke, also der oberen Begrenzung des zweiten Zuges, angeordnet sein.

Die Zugabe kann aber auch durch eine Öffnung in den aufsteigenden Kanal, oder durch eine seitliche Öffnung im zweiten Zug erfolgen. Denkbar ist auch eine Ausführungsvariante, nach der die Zugabe der kugelförmigen Teile sowohl auf die eine als auch auf die andere Weise erfolgt.

Bei der Schüttung kann es sich um eine Kugelschüttung handeln, wobei die Kugeln kreisrunde Kugeln, ovale Kugeln oder andere runde Schüttungsteile darstellen können. Ebenfalls können Polyeder zum Einsatz kommen, deren Form einer Kugelform angenähert ist.

Vorteilhaft ist es, als kugelförmige Teile Keramikkugeln oder Kugeln aus einem anderen korrosionsbeständigen Material wie Stahl zu verwenden.

Bei den Kugeln kann es sich um Kugel mit einem Durchmesser zwischen 5 und 25 mm handeln, die aus einer temperaturschockbeständigen, abriebfesten Keramik bestehen, die über eine hohe Wärmeleitfähigkeit verfügen, z. B. Al₂O₃. Die Wärmeleitfähigkeit kann durch den Zusatz von Siliziumcarbit (SIC) erhöht werden.

Die Kugelschüttung kann aus Kugeln mit einem einzigen Durchmesser, z. B. 10 mm, bestehen, aus einem Kugelgemisch mit Kugeln unterschiedlicher Durchmesser, aber auch aus Kugeln in unterschiedlichen Chargen wie 10% 5 mm, 20% 10 mm und 70% 20 mm. Diese Kugelschüttung kann außerdem aus einer Mischung verschiedener Kugelmaterialien bestehen.

Vorteilhaft ist es weiterhin, wenn die Kugeln aus einem Katalysatormaterial bestehen oder mit diesem ganz oder teilweise beschichtet sind, beispielsweise mit Vanadiumpentoxid. Damit wird die Umwandlung von Stickoxid und Ammoniak zu Stickstoff und Wasser begünstigt. In diesem Fall dient das Wanderbett der Kugelschüttung als sich selbst reinigender Wanderbett-Katalysator, der den Ammoniakschlupf des SNCR-Systems (Selektive Nicht-Katalytische Entstickung, selective non-catalytic reduction of Nitrous oxides) begrenzt. Aufgrund der hohen Betriebstemperatur von etwa 850 Grad Celsius am Eintritt in das Wanderbett, hat der Katalysator einen sehr hohen Effekt bei der Reduzierung des Ammoniakschlupfes.

Der Vorteil der erfindungsgemäßen Lösung besteht in der Entfernung der Überhitzerheizflächen aus der Rauchgasströmung. Korrosive Bestandteile der Flugasche können keine dichte Schicht auf den Heizflächen formen, da diese permanent durch die Bewegung der Keramikkugeln über die Oberfläche der Heizflächen entfernt werden, während die Schüttung nach unten wandert. Hierdurch kommt es zu einer signifikanten Reduktion der Korrosionsrate am Überhitzer. Diese ist auch durch die Strömungsgeschwindigkeit der Rauchgase und der damit einhergehenden Erosion beeinflusst. Durch eine Entfernung der Überhitzer aus dem Rauchgas wird dieser Einfluss vollständig beseitigt. Die Wanderung der Schüttung ist unproblematisch, da die Wandergeschwindigkeit niedrig ist. Diese kann zwischen 1 und 20 Meter pro Stunde liegen. Weiterhin ist es vorteilhaft, dass zwischen der oberen und der unteren Öffnung zur Zugabe und Entnahme der Kugeln der sich nach unten bewegenden Schüttung mindestens eine Fördereinrichtung angeordnet ist. Vorteilhaft können dabei Förderschnecken und Senkrechtförderer (z.B. Becherwerke) sein. So kann beispielsweise unter dem Aschetrichter und zur Aufgabe der Kugeln jeweils eine Förderschnecke angeordnet sein. Zwischen den beiden Förderschnecken kann ein Senkrechtförder angeordnet sein, der die Kugeln der Schüttung nach oben transportiert.

Vorteilhaft ist es weiterhin, nach der unteren Öffnung des Trichters ein Sieb zum Trennen von Asche und/oder Feinstaub von der Kugelschüttung anzuordnen. Das Sieb muss entsprechend dem Durchmesser der Kugeln eine Maschenweite aufweisen, dass die Kugeln auf dem Siebbelag zurückbleiben, während die Asche und der Feinstaub das Sieb als Siebdurchgang verlassen.

Vorteilhaft ist es weiterhin, im zweiten Zug eine Trennwand zum dritten Zug oder zum aufsteigenden Kanal so anzuordnen, dass in diesem Bereich durch diese der Durchmesser des zweiten Zuges reduziert wird, so dass höhere Gasgeschwindigkeiten des Rauchgases entstehen. Diese Trennwand dient gleichzeitig als Umlenkung für das Rauchgas.

Vorteilhaft ist es, die Trennwand an der oberen Kesselwand zwischen dem zweiten Zug und dem aufsteigenden Kanal oder dem dritten Zug anzuordnen.

Weiterhin ist es vorteilhaft, wenn zwischen der Kesselwand und der Trennwand ein Winkel besteht. Dieser Winkel sollte einen stumpfen Winkel darstellen. Dabei ist es vorteilhaft, wenn dieser in einem Bereich zwischen 120 und 150 Grad liegt.

Die erfindungsgemäße Lösung weist die folgenden Vorteile auf:
- Durch die Entkopplung der Überhitzer vom Rauchgas kann eine höhere Überhitzertemperatur erzielt werden, beispielsweise bis 550 Grad Celsius.
- Die Korrosionsrate der Überhitzer ist geringer und damit die Standzeit höher als bei einer konventionellen Ausführung.
- Im Wanderbett können deutlich höhere Strömungsgeschwindigkeiten des Rauchgases realisiert werden, als innerhalb der Konvektivheizflächen. Hierdurch wird der Wärmeübergang auf das Wanderbett verbessert.
- Durch die Wanderbewegung kommt es zu einer kontinuierlichen Reinigung der Heizflächen, so dass Reinigungseinrichtungen entfallen.
- Durch die Bewegung der Kugeln wird die abgelagerte Asche aufgemahlen und kann leichter aus dem Kessel entfernt werden.
- Durch die Erhöhung der Wärmeleitfähigkeit mittels SiC kann die Baugröße von Wärmetauscher und Überhitzer verkleinert werden.
- Durch die Verjüngung des Querschnitts im zweiten Zug wird eine horizontale Durchmischung der als Wanderbett funktionierenden Kugelschüttung ermöglicht, die ein Verkleben der Kugeln verhindert.
- Durch die Beschichtung mit einer aktiven Oberfläche / Katalysatormaterial erhält das Wanderbett eine zusätzlich Funktion zu Reduktion der Stickoxidemissionen. Hierdurch entfällt die Notwendigkeit einen Schlupfkatalysator zu bauen, sollte dies aufgrund der Emissionsgrenzwerte nötig sein.
- Die katalytische Reduktion der Stickoxide ist sehr effizient, das sie bei einer Temperatur von 650 Grad Celsius bis 850 Grad Celsius in einem optimalen Temperaturfenster erfolgt.
- Durch das optimale Temperaturfenster kann der Ammoniakschlupf stromabwärts des Katalysators noch einmal deutlich reduziert werden.
- Durch die hohe Effizienz des Katalysators in der Begrenzung des Ammoniakschlupfes kann die Stöchiometrie von Ammoniak in der SNCR erhöht und damit die Abscheideleistung der SNCR insgesamt verbessert werden.

Im Folgenden soll die Erfindung an zwei Figuren und einem Ausführungsbeispiel näher erläutert werden. Die Figuren zeigen:
- *Figur 1:*: Schematische Darstellung des Weges des Rauchgases durch einen erfindungsgemäßen Mehrzugkessel, in dem die Kugelschüttung über die aufsteigende Wand zugegeben wird.
- *Figur 2:*: Schematische Darstellung des Weges des Rauchgases durch einen erfindungsgemäßen Mehrzugkessel, in dem die Kugelschüttung über eine Oberöffnung in der Decke des zweiten Zuges zugegeben wird.

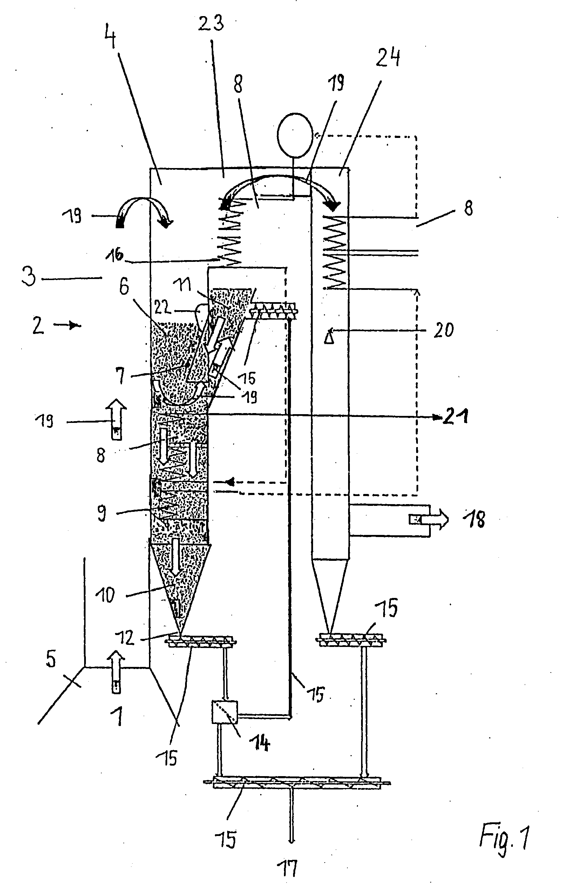

Die *Figur 1* zeigt in schematischer Darstellung den Weg des Rauchgases 1 durch den erfindungsgemäßen Mehrzugkessel 2, der vier Züge aufweist. Das Rauchgas 1 gelangt durch eine untere Öffnung 5 in den ersten Zug 3 des Mehrzugkessels 2, wobei das Rauchgas 1 am oberen Ende des ersten Zuges 3 in den zweiten Zug 4 umgelenkt wird. Die Fließrichtung 19 des Rauchgases ist durch entsprechende Pfeile gekennzeichnet. Im ersten und im zweiten Zug 3, 4 des Mehrzugkessels 2 wird das Rauchgas 1 von über 1.050 Grad Celsius auf ca. 850 Grad Celsius abgekühlt und trifft im zweiten Zug 4 auf die Kugelschüttung 6. Diese Kugelschüttung 6 fließt langsam und kontinuierlich durch die Schwerkraft nach unten und wird durch den Trichter 10 aus dem zweiten Zug 4 über die Öffnung 12 ausgetragen. Die Kugelschüttung 6 besteht aus Keramikkugeln, die mit einem Katalysator beschichtet sind. Im zweiten Zug 4 sind ein Überhitzer 8 und ein Wärmetauscher 9 angeordnet. Der Überhitzer 8 stellt einen Überhitzer dar, in dem Heißdampf 21 erzeugt wird. Die Temperatur des Rauchgases 1 sinkt im Bereich des aufsteigenden Kanals 11 von 850 auf ca. 650 Grad Celsius. Durch die sich nach unten bewegende Kugelschüttung 6 sind Überhitzer 8 und Wärmetauscher 9 in Keramikkugeln eingebettet, die Wärme übertragen und gewähren, dass der Überhitzer 8 nur indirekt mit dem Rauchgas 1 in Berührung kommt. Weiterhin verhindert die Bewegung der nach unten strömenden Kugelschüttung 6, dass Korrosion durch sich absetzende Ascheteile und Feinstaub 17 entsteht, da die Kugeln der Kugelschüttung 6 aneinander und sowohl am Überhitzer 8 als auch am Wärmetauscher 9 vorbeiströmen. Das Rauchgas 1 strömt zunächst abwärts und gibt Wärme an die Kugelschüttung 6 ab. Das Rauchgas 1 verlässt die Kugelschüttung 6 durch den aufsteigenden Kanal 11, der zum dritten Zug 23 führt oder dessen unteres Ende darstellt. Am Austritt des aufsteigenden Kanals 11 hat das Rauchgas 1 in etwa eine Temperatur von 650 Grad Celsius. Im Bereich des aufsteigenden Kanals 11 ist eine Trennwand 7 im Winkel 22 von 130 Grad zur Kesselwand 16 angeordnet, wobei eine höhere Geschwindigkeit des Rauchgases 1 entsteht, die sich positiv auf die Wärmeübertragung vom Rauchgas 1 auf die Kugeln in der Kugelschüttung 6 auswirkt. Durch die Verkleinerung des freien Querschnitts in der Rauchgasströmung wird auch ein Verkleben der Kugeln in der Kugelschüttung 6 durch abgelagerten Feinstaub und Asche 17 verhindert. Die Kugelschüttung 6, die im zweiten Zug 4 ständig nach unten wandert, gibt ihre weiter oben aufgenommene Wärme des Rauchgases 1 weiter unten teilweise wieder an die Heizflächen des Überhitzers 8 und des Wärmetauschers 9 ab. Die Kugeln der Kugelschüttung 6 werden im Trichter 10 zusammengeführt, verlassen über die Öffnung 12 den Trichter 10 und werden durch die Fördereinrichtung 15, die eine Transportschnecke darstellt, auf ein Sieb 14 ausgebracht. Dieses Sieb 14 trennt die Kugeln von Asche und Feinstaub 17, der mittels Fördereinrichtung 15 weiter transportiert und deponiert werden kann. Weiterhin fördert eine Fördereinrichtung 15 wie ein Senkrechtförderer im vorliegenden Ausführungsbeispiel die Kugelschüttung 6 zu einer weiteren Transportschnecke, die die Kugeln der Kugelschüttung 6 oberhalb der Trennwand 7 in den aufsteigenden Kanal 11 abgibt.

Die Figur 1 zeigt weiterhin das Rauchgas 1 nach Verlassen der Kugelschüttung 6. Dabei gelangt dieses im dritten Zug 23 zu einem weiteren Überhitzer 8 und einem weiteren Wärmetauscher 9 im vierten Zug 24. In diesem vierten Zug 24 ist ein Temperatursensor 20 angeordnet. Nach diesem vierten Zug 24 verlässt das gereinigte Rauchgas 18 den Mehrzugkessel 2. Unter dem vierten Zug 24 ist als Fördereinrichtung 15 ebenfalls eine Transportschnecke angeordnet, die Asche und Feinstaub 17 abführt.

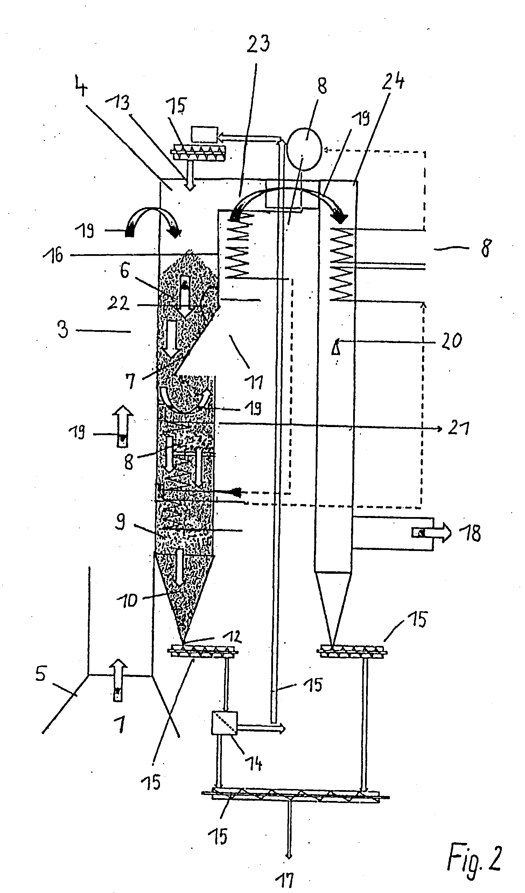

Die *Figur 2* zeigt den erfindungsgemäßen Mehrzugkessel 2 in schematischer Darstellung, wobei die Kugeln der Kugelschüttung 6 in den zweiten Zug 4 durch eine Öffnung 13 in der Decke des zweiten Zuges 4 zugegeben werden. Dazu werden die Kugeln mittels einer Fördereinrichtung 15, die eine Dosierschnecke darstellt, in die Öffnung 13 befördert, so dass die Kugeln in die Kugelschüttung 6 oberhalb der Trennwand 7 gelangen, die eine Verringerung des Querschnittes des zweiten Zuges 4 und damit einer Erhöhung der Geschwindigkeit des Rauchgases 1 zur Folge hat. Im aufsteigenden Kanal 11 befinden sich nach diesem Ausführungsbeispiel keine Kugeln der Kugelschüttung 6. Die Zugabe der Kugelschüttung 6 durch die Öffnung 13 kann mittels Zellenradschleuse erfolgen.

### Liste der verwendeten Bezugszeichen

- 1: Rauchgas
- 2: Mehrzugkessel
- 3: Erster Zug
- 4: Zweiter Zug
- 5: Untere Öffnung des Kessel für das einströmende Rauchgas
- 6: Kugelschüttung
- 7: Trennwand
- 8: Überhitzer
- 9: Wärmetauscher
- 10: Trichter
- 11: Aufsteigender Kanal
- 12: Öffnungen im Trichter zum Ausschleusen von Kugelschüttung (6) und Asche
- 13: Öffnung in der Decke des zweiten Zuges (4) zum Einführen der Kugelschüttung (6)
- 14: Sieb zum Trennen von Asche und Kugeln
- 15: Fördereinrichtung
- 16: Kesselwand
- 17: Asche und Feinstaub
- 18: Gereinigtes Rauchgas
- 19: Fließrichtung des Rauchgases
- 20: Temperatursensor
- 21: Heißdampf
- 22: Winkel
- 23: Dritter Zug
- 24: Vierter Zug

## Patentansprüche

1. Mehrzugkessel (2) zur Kühlung bzw. zur Kühlung und zur gleichzeitigen Reinigung eines Rauchgases (1) einer Müllverbrennungsanlage, wobei der Kessel einen ersten Zug (3) eine untere Öffnung (5) in die Rauchgas (1) eingeleitet wird aufweist und einen zweiten Zug (4), einen Überhitzer (8), einen Wärmetauscher (9), einen Boden mit einer unteren Öffnung (12) und einen aufsteigenden Kanal (11), durch den das Rauchgas (1) den zweiten Zug verlässt,
eine sich nach unten bewegende Schüttung (6) aus kugelförmigen Teilen im zweiten Zug (4) des Kessels, die durch die untere Öffnung (12) des Bodens entnommen und durch eine obere Öffnung in den zweiten Zug (4) aufgegeben wird, wobei durch die Bewegung der Schüttung (6) über die Oberfläche der Heizflächen die korrosiven Bestandteile der Flugasche entfernt werden, wobei der Überhitzer (8) und der Wärmetauscher (9) im zweiten Zug (4) angeordnet sind, wobei durch die sich nach unten bewegende Schüttung (6) Überhitzer (8) und Wärmetauscher (9) in die kugelförmigen Teile eingebettet sind, die Wärme übertragen und gewähren, dass der Überhitzer (8) nur indirekt mit dem Rauchgas (1) in Berührung kommt.

2. Mehrzugkessel nach Anspruch 1, **dadurch gekennzeichnet, dass** die obere Öffnung im zweiten Zug (4) eine Öffnung (13) in der Decke des zweiten Zuges (4) darstellt.

3. Mehrzugkessel nach Anspruch 1 oder 2, **dadurch gekennzeichnet, dass** die obere Öffnung im zweiten Zug (4) eine Öffnung im aufsteigenden Kanal (11) darstellt.

4. Mehrzugkessel nach Anspruch 1 oder 2, **dadurch gekennzeichnet, dass** die obere Öffnung im zweiten Zug (4) eine Öffnung in der Seitenwand des zweiten Zugs darstellt.

5. Mehrzugkessel nach einem der Ansprüche 1 bis 4, **dadurch gekennzeichnet, dass** die Schüttung (6) aus Keramikkugeln besteht.

6. Mehrzugkessel nach einem der Ansprüche 1 bis 4, **dadurch gekennzeichnet, dass** die Schüttung (6) aus Metallkugel besteht.

7. Mehrzugkessel nach einem der Ansprüche 1 bis 4, **dadurch gekennzeichnet, dass** die Schüttung (6) aus einer Mischung aus Keramik und Metallkugel besteht.

8. Mehrzugkessel nach einem der Ansprüche 1 bis 4, **dadurch gekennzeichnet, dass** die Schüttung (6) aus Katalysatormaterial besteht oder mit diesem beschichtet ist.

9. Mehrzugkessel nach einem der Ansprüche 1 bis 8, **dadurch gekennzeichnet, dass** zwischen der oberen Öffnung (11, 13) und der unteren Öffnung (12) mindestens eine Fördereinrichtung (15) angeordnet ist.

10. Mehrzugkessel nach einem der Ansprüche 1 bis 9, **dadurch gekennzeichnet, dass** der Boden mit der unteren Öffnung einen Trichter (10) darstellt.

11. Mehrzugkessel nach einem der Ansprüche 1 bis 9, **dadurch gekennzeichnet, dass** nach der unteren Öffnung (12) des Trichters (10) ein Sieb (14) zum Trennen von Asche und/oder Feinstaub (17) und der Kugelschüttung (6) angeordnet ist.

12. Mehrzugkessel nach einem der Ansprüche 1 bis 11, **dadurch gekennzeichnet, dass** im zweiten Zug (4) eine Trennwand (7) angeordnet ist.

13. Mehrzugkessel nach Anspruch 12, **dadurch gekennzeichnet, dass** die Trennwand (7) an der oberen Kesselwand (16) zwischen dem zweiten Zug (4) und dem aufsteigenden Kanal (11) angeordnet ist.

14. Mehrzugkessel nach Anspruch 13 **dadurch gekennzeichnet, dass** die Trennwand (7) zur Kesselwand (16) einen Winkel (22) im Bereich zwischen 120 und 150 Grad aufweist.

## Claims

1. Multi-pass boiler (2) for cooling or for cooling and simultaneously cleaning a flue gas (1) of a waste incineration plant, wherein the boiler has a first pass (3), a lower opening (5) in which flue gas (1) is introduced and a second pass (4), a superheater (8), a heat exchanger (9), a base having a lower opening (12) and a rising channel (11), through which the flue gas (1) leaves the second pass, a downwardly moving fill (6) which comprises spherical members in the second pass (4) of the boiler and which is removed through the lower opening (12) of the base and passed through an upper opening into the second pass (4), wherein, as a result of the movement of the fill (6) over the surface of the heating faces, the corrosive components of the fly ash are removed, wherein the superheater (8) and the heat exchanger (9) are arranged in the second pass (4), wherein, as a result of the downwardly moving fill (6), there are embedded in the spherical members superheaters (8) and heat exchangers (9) which transfer heat and ensure that the superheater (8) only indirectly comes into contact with the flue gas (1).

2. Multi-pass boiler according to claim 1, **characterised in that** the upper opening in the second pass (4) constitutes an opening (13) in the ceiling of the second pass (4).

3. Multi-pass boiler according to claim 1 or claim 2, **characterised in that** the upper opening in the second pass (4) constitutes an opening in the rising channel (11).

4. Multi-pass boiler according to claim 1 or claim 2, **characterised in that** the upper opening in the second pass (4) constitutes an opening in the side wall of the second pass.

5. Multi-pass boiler according to any one of claims 1 to 4, **characterised in that** the fill (6) comprises ceramic balls.

6. Multi-pass boiler according to any one of claims 1 to 4, **characterised in that** the fill (6) comprises metal balls.

7. Multi-pass boiler according to any one of claims 1 to 4, **characterised in that** the fill (6) comprises a mixture of ceramic and metal balls.

8. Multi-pass boiler according to any one of claims 1 to 4, **characterised in that** the fill (6) comprises catalyst material or is coated therewith.

9. Multi-pass boiler according to any one of claims 1 to 8, **characterised in that** at least one conveying device (15) is arranged between the upper opening (11, 13) and the lower opening (12).

10. Multi-pass boiler according to any one of claims 1 to 9, **characterised in that** the base with the lower opening constitutes a funnel (10).

11. Multi-pass boiler according to any one of claims 1 to 9, **characterised in that** a screen (14) for separating ash and/or fine dust (17) and the ball filling (6) is arranged after the lower opening (12) of the funnel (10).

12. Multi-pass boiler according to any one of claims 1 to 11, **characterised in that** a partition wall (7) is arranged in the second pass (4).

13. Multi-pass boiler according to claim 12, **characterised in that** the partition wall (7) is arranged on the upper boiler wall (16) between the second pass (4) and the rising channel (11) .

14. Multi-pass boiler according to claim 13, **characterised in that** the partition wall (7) with respect to the boiler wall (16) has an angle (22) in the range between 120 and 150 degrees.

## Revendications

1. Chaudière à plusieurs évents (2) servant à refroidir ou servant à refroidir et à nettoyer des gaz de fumée (1) d'une installation d'incinération de déchets, la chaudière comportant un premier évent (3) et une ouverture (5) inférieure, dans laquelle les gaz de fumée (1) sont introduits, et un deuxième évent (4), un surchauffeur (8), un échangeur de chaleur (9), un fond pourvu d'une ouverture inférieure (12) et un canal (11) ascendant, par lequel les gaz de fumée (1) quittent le deuxième évent,
le deuxième évent (4) de la chaudière comporte une matière en vrac (6) se déplaçant vers le bas, composée de particules en forme de billes, laquelle est prélevée par l'ouverture inférieure (12) du fond et distribuée par une ouverture supérieure dans le deuxième évent (4), les constituants corrosifs des cendres volantes étant éliminés par le déplacement de la matière en vrac (6) sur les surfaces chauffantes,
le surchauffeur (8) et l'échangeur de chaleur (9) étant disposés dans le deuxième évent (4), le surchauffeur (8) et l'échangeur de chaleur (9) étant, en raison du déplacement vers le bas de la matière en vrac (6), noyés dans les particules en forme de billes qui transfèrent la chaleur et permettent au surchauffeur (8) d'entrer seulement de manière indirecte en contact avec les gaz de fumée (1).

2. Chaudière à plusieurs évents suivant la revendication 1, **caractérisée en ce que** l'ouverture supérieure dans le deuxième évent (4) est une ouverture (13) dans le plafond du deuxième évent (4).

3. Chaudière à plusieurs évents suivant la revendication 1 ou 2, **caractérisée en ce que** l'ouverture supérieure dans le deuxième évent (4) est une ouverture dans le canal (11) ascendant.

4. Chaudière à plusieurs évents suivant la revendication 1 ou 2, **caractérisée en ce que** l'ouverture supérieure dans le deuxième évent (4) est une ouverture dans la paroi latérale du deuxième évent.

5. Chaudière à plusieurs évents suivant une des revendications 1 à 4, **caractérisée en ce que** la matière en vrac (6) est constituée de billes céramiques.

6. Chaudière à plusieurs évents suivant une des revendications 1 à 4, **caractérisée en ce que** la matière en vrac (6) est constituée de billes métalliques.

7. Chaudière à plusieurs évents suivant la revendication 1 à 4, **caractérisée en ce que** la matière en vrac (6) est constituée d'un mélange de billes céramiques et de billes métalliques.

8. Chaudière à plusieurs évents suivant une des revendications 1 à 4, **caractérisée en ce que** la matière en vrac (6) est constitué ou revêtue d'un matériau catalyseur.

9. Chaudière à plusieurs évents suivant une des revendications 1 à 8, **caractérisée en ce qu'**entre l'ouverture supérieure (11, 13) et l'ouverture inférieure (12) est disposé au moins un système de transport (15).

10. Chaudière à plusieurs évents suivant une des revendications 1 à 9, **caractérisée en ce que** le fond avec l'ouverture inférieure est une trémie (10).

11. Chaudière à plusieurs évents suivant une des revendications 1 à 9, **caractérisée en ce qu'**un tamis (14) servant à séparer des cendres et/ou des poussières fines (17) de la matière en vrac (6) est disposé en aval de l'ouverture inférieure (12) de la trémie (10).

12. Chaudière à plusieurs évents suivant une des revendications 1 à 11, **caractérisée en ce qu'**une paroi de séparation (7) est disposée dans le deuxième évent (4).

13. Chaudière à plusieurs évents suivant la revendication 12, **caractérisée en ce que** la paroi de séparation (7) est disposée sur la paroi supérieure (7) entre le deuxième évent (4) et le canal (11) ascendant.

14. Chaudière à plusieurs évents suivant la revendication 13, **caractérisée en ce que** la paroi de séparation (7) forme un angle (22) dans la plage entre 120 et 150 degrés avec la paroi de la chaudière.
